# EUROPEAN PATENT APPLICATION

(11) **EP 2 312 772 A1**
(43) Date of publication of application: **20.04.2011**
(21) Application number: 10187152.3
(22) Date of filing: 11.10.2010
(51) Int. Cl.: H04B 13/00

(54) **Transceiver and communication system including the same**

(30) Priority: 14.10.2009 JP 2009237205
(71) Applicant: Alps Electric Co., Ltd., Tokyo 145-8501 (JP)
(72) Inventor: Shibata, Etsuya, Tokyo Tokyo 145-8501 (JP); Saito, Yoshiharu, Tokyo Tokyo 145-8501 (JP)
(74) Representative: Klunker . Schmitt-Nilson . Hirsch

(57) **Abstract**

A transceiver (4) includes a transmitting/receiving electrode (11) that is come into contact with or capacitively coupled to a human body (2), serving as a transmission medium, a receiving mechanism (12) connected to the transmitting/receiving electrode (11), and a transmitting mechanism (13) connected to the transmitting/receiving electrode (11). Upon signal transmission, the receiving mechanism (12) is open-circuited as viewed from the transmitting/receiving electrode (11) to allow the impedance on the transmitting mechanism (13) side as viewed from the transmitting/receiving electrode (11) to match that of the human body (2). Upon signal reception, the transmitting mechanism (13) is open-circuited as viewed from the transmitting/receiving electrode (11) to allow the impedance on the receiving mechanism (12) side as viewed from the transmitting/receiving electrode (11) to match that of the human body (2).

## Description

### BACKGROUND OF THE INVENTION

### 1. Field of the Invention

The present invention relates to a transceiver that performs both transmission and reception through a transmission medium, such as a human body, and a communication system including the transceiver.

### 2. Description of the Related Art

With the recent development of technology, there has been proposed a whole new communication method using an electric field induced by, for example, a human body. According to such a communication method, a transmitter applies an electric field corresponding to a modulated signal, obtained by modulating an information signal, to a human body which serves as a transmission medium, a receiver detects the electric field transmitted through the human body, and the information signal corresponding to the electric field is demodulated.

PCT Publication No. WO 2008/114729 discloses a transceiver using the above-described method. The transceiver disclosed in PCT Publication No. WO 2008/114729 includes a transmitting and receiving (hereinafter, "transmitting/receiving") electrode capacitively coupled to a human body, a transmitting mechanism which applies an electric field, serving as an information signal, to the human body upon signal transmission, and a receiving mechanism which receives a signal from the electric field applied to the human body upon signal reception such that these mechanisms are connected to the transmitting/receiving electrode. The receiving mechanism constituting the transmitting and receiving circuitry includes an LC resonant circuit that extracts a predetermined frequency component from the information signal received through the transmitting/receiving electrode.

### SUMMARY OF THE INVENTION

A human body typically has a high impedance. Accordingly, the impedance that the human body has can be regarded as a series impedance for the transceiver. In this case, impedance matching between the human body and the transceiver is not achieved only using the impedance of the LC resonant circuit or the like upon signal reception in the transceiver disclosed in PCT Publication No. WO 2008/114729. Disadvantageously, the efficiency of information signal reception is degraded.

Since the human body has a high impedance, the signal level of an information signal output from the transmitting mechanism is set to high (high voltage). At this time, since the transmitting mechanism and the receiving mechanism of the transceiver share the transmitting/receiving electrode, the receiving mechanism may be damaged due to the information signal which enters the receiving mechanism from the transmitting mechanism. Disadvantageously, the transmission level is restricted.

The present invention has been made in consideration of the above-described circumstances and provides a transceiver capable of, when performing transmission and reception through a transmission medium, such as a human body, having a high impedance, increasing the reception efficiency upon reception of an information signal and increasing the transmission level of an information signal upon transmission, and a communication system including the transceiver.

According to an aspect of the present invention, there is provided a transceiver transmitting and receiving information signals through a transmission medium having a particular impedance, the transceiver including a transmitting/receiving electrode that is come into contact with or capacitively coupled to the transmission medium, a receiving mechanism connected to the transmitting/receiving electrode, and a transmitting mechanism connected to the transmitting/receiving electrode. Upon signal transmission, the receiving mechanism is open-circuited as viewed from the transmitting/receiving electrode to allow the impedance on the transmitting mechanism side as viewed from the transmitting/receiving electrode to match the particular impedance. Upon signal reception, the transmitting mechanism is open-circuited as viewed from the transmitting/receiving electrode to allow the impedance on the receiving mechanism side as viewed from the transmitting/receiving electrode to match the particular impedance.

With this structure, since impedance matching between the transmission medium and the transceiver is achieved upon both signal transmission and signal reception, the efficiency of transmission and reception of information signals can be increased. In addition, since the receiving mechanism of the transceiver is open-circuited upon transmission of an information signal, the signal can be prevented from entering the receiving mechanism from the transmitting mechanism. Even if the transmission level of the information signal is increased, there is no fear of damage of the receiving mechanism due to the information signal. Advantageously, an information signal can be transmitted to a transmission medium having a high impedance without restricting the transmission level of the information signal.

In the above-described transceiver according to this aspect of the present invention, preferably, the receiving mechanism includes a switching element and the transmitting mechanism includes an amplifying element. Upon signal transmission, the switching element is turned off and the amplifying element is turned on. Upon signal reception, the switching element is turned on and the amplifying element is turned off.

According to this structure, the impedance on the receiving mechanism side can be open-circuited from the transmitting/receiving electrode and the impedance on the transmitting mechanism side can be open-circuited therefrom with the simple structure.

In the above-described transceiver according to this aspect of the present invention, the switching element may include a gallium arsenide device.

With this structure, since the switching element including the gallium arsenide device has high voltage withstanding characteristics, the transmission level of an information signal can be increased upon transmission of the signal.

In the above-described transceiver according to this aspect of the present invention, the receiving mechanism may further include a matching resistor such that the resistor is connected between the transmitting/receiving electrode and ground.

According to this structure, impedance matching between the transmission medium and the receiving mechanism can be achieved upon signal reception with the simple structure.

In the above-described transceiver according to this aspect of the present invention, the receiving mechanism may include a parallel resonant circuit including a capacitor and an inductor such that the circuit is connected between the transmitting/receiving electrode and ground.

According to another aspect of the present invention, there is provided a communication system including the transceiver according to the foregoing aspect and a communication device applying an information signal as an electric field to the transmission medium.

With this configuration, the efficiency of transmission and reception of information signals can be increased, so that appropriate communication can be performed through a transmission medium having a high impedance.

### BRIEF DESCRIPTION OF THE DRAWINGS

Fig. 1 is a diagram that illustrates a transceiver according to an embodiment of the present invention and illustrates the configuration of a communication system;
Fig. 2 is a diagram that illustrates the transceiver according to the embodiment of the present invention and explains an operation of the transceiver upon signal reception; and
Fig. 3 is a diagram that illustrates the transceiver according to the embodiment of the present invention and explains an operation of the transceiver upon signal transmission.

### DESCRIPTION OF THE PREFERRED EMBODIMENTS

An embodiment of the present invention will be described in detail below with reference to the accompanying drawings. A transceiver according to the present embodiment achieves impedance matching with a transmission medium, such as a human body, having a high impedance to increase the efficiency of transmission and reception of information signals through the transmission medium. In the following description, the transceiver transmitting and receiving information signals through a human body, serving as a transmission medium, will be described as an example. The present invention is not limited to the embodiment. Modifications of the embodiment can be made appropriately.

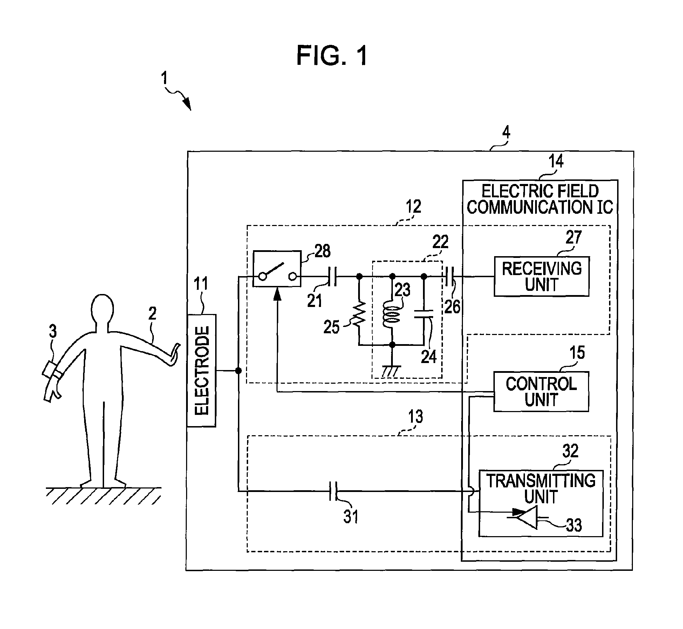

A communication system including the transceiver according to the embodiment of the present invention will be described with reference to Fig. 1. Fig. 1 is a diagram illustrating the configuration of the communication system according to the present embodiment of the present invention.

Referring to Fig. 1, the communication system, indicated at 1, is configured to transmit and receive information signals through a transmission medium, such as a human body 2, and includes a communication device 3 attached to the human body 2 and a transceiver 4 that is come into contact with or capacitively coupled to the human body 2 to communicate with the communication device 3 through the human body 2. The communication device 3 has substantially the same configuration as that of the transceiver 4 and differs from the transceiver 4 in only that the device is attached to the human body 2. In the following description, therefore, explanation of the communication device 3 will be omitted as much as possible and the transceiver 4 will be mainly described.

In this communication system 1, the communication device 3 is electrically capacitively coupled to the human body 2 and the transceiver 4 is electrically capacitively coupled thereto so that an information signal is transmitted by an electric field obtained by modulating the information signal. In this case, displacement current flows through the human body 2 but steady-state current does not flow through the human body 2. Accordingly, the communication device 3 doesn't have to be in electrical conduction with the human body 2. Therefore, since an electrode of the communication device 3 is capacitively coupled to the human body 2 through, for example, a thin cloth, an information signal can be transmitted through clothes.

The human body 2 is a transmission medium through which displacement current flows and has a high impedance of, for example, several hundreds of ohms [Ω]. In the communication system 1, therefore, in order to transmit information signals through the human body 2, the transmission level of an information signal output from each of the communication device 3 and the transceiver 4 is set to high (high voltage). A transmitting mechanism of each of the communication device 3 and the transceiver 4 is designed to withstand such a high transmission level. On the other hand, a receiving mechanism of each of the communication device 3 and the transceiver 4 does not withstand a high signal level because the mechanism receives an information signal having a signal level reduced through the human body 2.

The transceiver 4 includes a transmitting and receiving electrode (hereinafter, referred to as "transmitting/receiving electrode") 11 that is come into contact with or electrically capacitively coupled to the human body 2. The transmitting/receiving electrode 11 is connected to a receiving mechanism 12 which receives an information signal through the transmitting/receiving electrode 11 from the communication device 3 and a transmitting mechanism 13 which transmits an information signal through the transmitting/receiving electrode 11 to the communication device 3. The transmitting/receiving electrode 11, including a flat plate electrode, is come into contact with or capacitively coupled to the human body 2, thus providing communication with the communication device 3 through an electric field applied to the human body 2.

The receiving mechanism 12 includes an LC resonant circuit 22 which is connected to the transmitting/receiving electrode 11 through a coupling capacitor 21. The LC resonant circuit 22 includes an inductor 23 and a capacitor 24 which are connected in parallel between the coupling capacitor 21 and ground. A resonant frequency (about 10.7 [MHz]) corresponding to a frequency component for communication is set in the LC resonant circuit 22. A matching resistor 25 for impedance matching is provided in parallel with the LC resonant circuit 22 between the coupling capacitor 21 and the ground.

The LC resonant circuit 22 is connected through a coupling capacitor 26 to a receiving unit 27 provided for an electric field communication IC 14 such that the receiving unit 27 is positioned downstream of the LC resonant circuit 22. The receiving unit 27 includes a demodulating circuit (not illustrated) and demodulates a modulated signal received from the communication device 3 through the transmitting/receiving electrode 11 using a carrier used by the communication device 3 to acquire an information signal. A switching element 28 is provided between the coupling capacitor 21 and the transmitting/receiving electrode 11.

The switching element 28 is a GaAs switch including a gallium arsenide device and has high voltage withstanding characteristics. Consequently, even when an information signal entering from the transmitting mechanism 13 upon signal transmission by the transceiver 4 is at a high voltage level, the switching element 28 can perform an appropriate switching operation. The switching element 28 is connected to a control unit 15 provided for the electric field communication IC 14 and is switched between on and off states under the control of the control unit 15.

In this case, the switching element 28 is turned on upon signal reception by the transceiver 4 to bring the transmitting/receiving electrode 11 and the receiving mechanism 12 into conduction and is turned off upon signal transmission by the transceiver 4 to bring the transmitting/receiving electrode 11 and the receiving mechanism 12 out of conduction. As described above, upon signal transmission by the transceiver 4, the switching element 28 disconnects the transmitting/receiving electrode 11 from the receiving mechanism 12, so that the impedance on the receiving mechanism 12 side as viewed from the transmitting/receiving electrode 11 is open-circuited.

Since the receiving mechanism 12 includes the matching resistor 25 in addition to the LC resonant circuit 22 and the receiving unit 27, an input impedance is set to a value equal to the impedance of the human body 2. The matching resistor 25 may be a fixed resistor or a variable resistor. When the matching resistor 25 is a fixed resistor, the impedance of the matching resistor 25 is set in accordance with the magnitude of the impedance of an average human body. When the matching resistor 25 is a variable resistor, the impedance of the matching resistor 25 is individually adjusted so as to match the impedance of the human body 2.

The transmitting mechanism 13 is connected through a coupling capacitor 31 to the transmitting/receiving electrode 11 and includes a transmitting unit 32 provided for the electric field communication IC 14. The transmitting unit 32 includes a modulating circuit (not illustrated) and modulates a carrier with an information signal to generate a modulated signal. In this case, the modulated signal has a frequency (ranging from several hundreds of kilohertz to several tens of megahertz) exhibiting the conductivity of the human body 2. This modulated signal is amplified and is applied as a change in voltage to the transmitting/receiving electrode 11, so that an electric field signal corresponding to the information signal is generated in the vicinity of the transmitting/receiving electrode 11. This electric field signal is given to the human body 2 and is then applied to the electrode of the communication device 3, so that the information signal is transmitted from the transceiver 4 to the communication device 3.

The transmitting mechanism 13 further includes an amplifier 33 that amplifies a modulated signal. The amplifier 33 includes a transistor (not illustrated) which serves as an amplifying element. The transistor functions as the amplifying element and also functions as a switching element. The transistor is connected to the control unit 15 provided for the electric field communication IC 14 and is switched between on and off states under the control of the control unit 15.

In this case, the transistor is turned on upon signal transmission by the transceiver 4 to bring the transmitting unit 32 and the transmitting/receiving electrode 11 into conduction and is turned off upon signal reception by the transceiver 4 to bring the transmitting unit 32 and the transmitting/receiving electrode 11 out of conduction. As described above, upon signal reception by the transceiver 4, the transistor disconnects the transmitting/receiving electrode 11 from the transmitting mechanism 13, so that the impedance on the transmitting mechanism 13 side as viewed from the transmitting/receiving electrode 11 is open-circuited. In the transmitting mechanism 13, the transmitting unit 32 sets an output impedance to a value equal to the impedance of the human body 2.

As described above, in the transceiver 4, the impedance of the receiving mechanism 12 and that of the transmitting mechanism 13 are set to a value equal to the impedance of the human body 2 and each of the switching element 28 and the transistor is switched between the on and off states in accordance with signal transmission or reception. This configuration allows each of the input and output impedances of the transceiver 4 to match the impedance of the human body 2.

As described above, the communication device 3 has substantially the same structure as that of the transceiver 4. Specifically, the communication device 3 is configured to transmit a modulated signal corresponding to an information signal to the transceiver 4 through an electric field applied to the human body 2 upon signal transmission and extract an information signal from a modulated signal received from the transceiver 4 upon signal reception. The communication device 3 is also configured so that each of the input and output impedances of the communication device 3 matches the impedance of the human body 2.

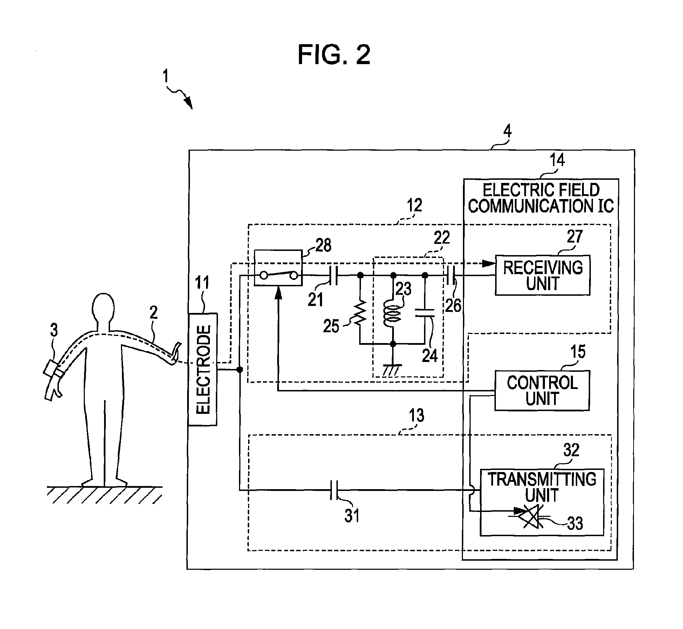

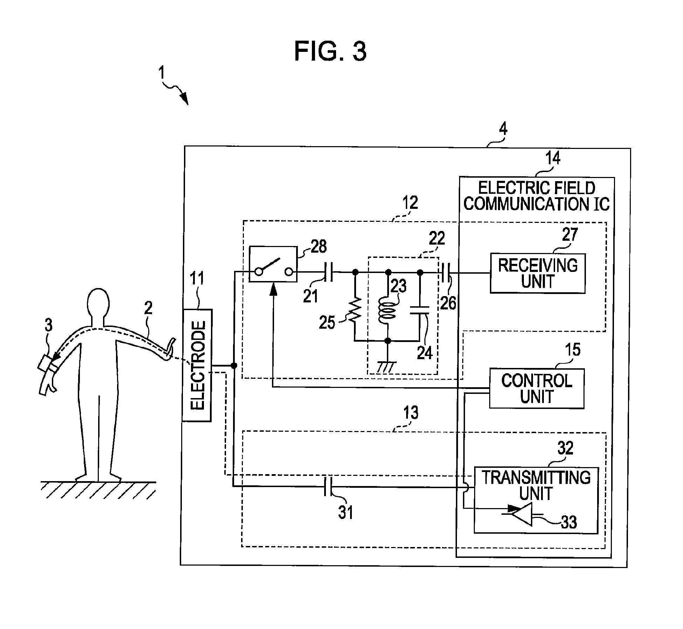

An operation of the transceiver according to the present embodiment of the present invention will be described in detail below with reference to Figs. 2 and 3. Fig. 2 is a diagram explaining an operation of the transceiver according to the present embodiment upon signal reception. Fig. 3 is a diagram explaining an operation of the transceiver according to the present embodiment upon signal transmission.

The operation of the transceiver 4 upon signal reception will be first described with reference to Fig. 2. Referring to Fig. 2, upon signal reception by the transceiver 4, the control unit 15 controls the switching element 28 and the transistor of the amplifier 33 such that the switching element 28 is turned on and the transistor is turned off, so that the impedance on the transmitting mechanism 13 side as viewed from the transmitting/receiving electrode 11 is open-circuited. Since the input impedance of the receiving mechanism 12 is set to a value equal to the impedance of the human body 2, when the impedance of the transmitting mechanism 13 is open-circuited, the input impedance of the receiving mechanism 12 is allowed to match the impedance of the human body 2.

In this state, a modulated signal corresponding to an information signal is transmitted from the communication device 3 through an electric field applied to the human body 2 to the transmitting/receiving electrode 11 of the transceiver 4. The LC resonant circuit 22 extracts a frequency component for communication from the modulated signal received by the transmitting/receiving electrode 11, the demodulating circuit in the receiving unit 27 demodulates the component, thus obtaining the information signal. At this time, since the input impedance of the receiving mechanism 12 is allowed to match the impedance of the human body 2, the efficiency of reception of the information signal is increased.

The operation of the transceiver 4 upon signal transmission will be subsequently described with reference to Fig. 3. As illustrated in Fig. 3, upon signal transmission by the transceiver 4, the control unit 15 controls the switching element 28 and the transistor in the amplifier 33 such that the switching element 28 is turned off and the transistor is turned on, so that the impedance on the receiving mechanism 12 side as viewed from the transmitting/receiving electrode 11 is open-circuited. Since the output impedance of the transmitting mechanism 13 is set to a value equal to the impedance of the human body 2, when the impedance of the receiving mechanism 12 is open-circuited, the output impedance of the transmitting mechanism 13 is allowed to match the impedance of the human body 2.

In this state, an information signal is modulated in the transmitting unit 32 and the modulated signal is amplified through the amplifier 33. The modulated signal is amplified to a high transmission level so that the signal can be transmitted through the human body 2 having a high impedance. At this time, since the impedance on the receiving mechanism 12 side as viewed from the transmitting/receiving electrode 11 is open-circuited, output from the transmitting mechanism 13 can be prevented from being distorted due to the effect of the receiving mechanism 12 and the receiving mechanism 12 which does not withstand a high voltage can be prevented from being damaged due to the entry of the information signal from the transmitting mechanism 13 into the receiving mechanism 12.

The amplified modulated signal is transmitted to the communication device 3 through an electric field applied to the human body 2. In the communication device 3, the signal is demodulated, so that the information signal is acquired. At this time, since the output impedance of the transmitting mechanism 13 is allowed to match the impedance of the human body 2, the efficiency of transmission of the information signal is increased.

As described above, in the transceiver 4 according to the present embodiment, since the input impedance of the receiving mechanism 12 or the output impedance of the transmitting mechanism 13 is allowed to match the impedance of the human body 2 upon signal reception or transmission, the efficiency of transmission and reception of information signals can be increased. In addition, since the receiving mechanism 12 of the transceiver 4 is open-circuited upon signal transmission, an information signal can be prevented from entering the receiving mechanism 12 from the transmitting mechanism 13. Even if the transmission level of the information signal is increased, there is no fear of damage of the receiving mechanism 12 due to the information signal. Accordingly, the information signal can be transmitted to the human body 2 having a high impedance without restricting the transmission level of the information signal.

In the above-described embodiment, the communication device is attached to the human body and the transceiver is placed apart from the human body. The configuration is not limited to this one. Any configuration is permissible so long as the communication device can communicate with the transceiver through a human body. For example, such a configuration that the communication device is placed apart from a human body and the transceiver is attached to the human body may be used.

In the above-described embodiment, the communication device and the transceiver have substantially the same structure. The structure is not limited to this one. The communication device may have any structure so long as the communication device can communicate with the transceiver through an electric field applied to a human body.

In the above-described embodiment, the transistor included in the amplifier in the transmitting mechanism is turned on or off, thus switching the impedance of the transmitting mechanism as viewed from the transmitting/receiving electrode between the open-circuited mode and the non-open-circuited mode. The structure is not limited to this one. The transmitting mechanism may have a structure in which the impedance of the transmitting mechanism as viewed from the transmitting/receiving electrode is switched between the open-circuited mode and the non-open-circuited mode. For example, the transmitting mechanism may include a component for controlling power supply to the transmitting unit, instead of the transistor.

In the above-described embodiment, the switching element in the receiving mechanism is turned on or off, thereby switching the impedance of the receiving mechanism as viewed from the transmitting/receiving electrode between the open-circuited mode and the non-open-circuited mode. The structure is not limited to this one. The receiving mechanism may have any structure so long as the impedance of the receiving mechanism as viewed from the transmitting/receiving electrode is switched between the open-circuited mode and the non-open-circuited mode. In this case, it is desirable that the receiving mechanism withstand a high-voltage information signal entering from the transmitting mechanism upon signal transmission by the transceiver.

In the above-described embodiment, the transmitting/receiving electrode has been described as a flat plate electrode. The structure is not limited to this one. The transmitting/receiving electrode may have any structure so long as the electrode can be come into contact or capacitively coupled to a human body. For example, the transmitting/receiving electrode may comprise a thin conductive material, such as a flexible conductive film.

In the above-described embodiment, the human body has been described as a transmission medium. The transmission medium is not limited to the above. Any transmission medium may be used so long as the medium can perform electric field communication. For example, the living body of a plant or animal, or anything other than the living body may be used.

In the above-described embodiment, the matching resistor allows the input impedance of the receiving mechanism to be equal to the impedance of a human body. The structure is not limited to this one using the matching resistor. If the input impedance of the receiving mechanism is equal to the impedance of a human body, a structure without the matching resistor may be used.

In the structure according to the above-described embodiment, the input impedance of the receiving mechanism is equal to the impedance of the human body upon signal reception. The structure is not limited to the case where the input impedance of the receiving mechanism is exactly equal to the impedance of the human body. The input impedance of the receiving mechanism may match the impedance of the human body to such an extent that matching therebetween is achieved.

In the structure according to the above-described embodiment, the output impedance of the transmitting mechanism is equal to the impedance of the human body upon signal transmission. The structure is not limited to the case where the output impedance of the transmitting mechanism is exactly equal to the impedance of the human body. The output impedance of the transmitting mechanism may match the impedance of the human body to such an extent that matching therebetween is achieved.

The embodiments disclosed herein are exemplary at all points and the present invention is not limited to the embodiments. The scope of the present invention is defined not by the description of only the above-described embodiments but by the scope of the appended claims. It should be understood that all variations may be included within the scope of the appended claims and the equivalent thereof.

As described above, the present invention has advantages in that the reception efficiency can be increased upon reception of an information signal and the transmission level of an information signal can be increased upon transmission of the signal. The present invention is useful to a transceiver and a communication system which perform both of transmission and reception through a transmission medium, such as a human body.

## Claims

1. A transceiver (4) transmitting and receiving information signals through a transmission medium having a particular impedance, the transceiver comprising:
a transmitting/receiving electrode (11) being come into contact with or capacitively coupled to the transmission medium;
a receiving mechanism (12) connected to the transmitting/receiving electrode (11); and
a transmitting mechanism (13) connected to the transmitting/receiving electrode (11), wherein
upon signal transmission, the receiving mechanism (12) is open-circuited as viewed from the transmitting/receiving electrode (11) to allow the impedance on the transmitting mechanism (13) side as viewed from the transmitting/receiving electrode (11) to match the particular impedance, and
upon signal reception, the transmitting mechanism (13) is open-circuited as viewed from the transmitting/receiving electrode (11) to allow the impedance on the receiving mechanism (12) side as viewed from the transmitting/receiving electrode (11) to match the particular impedance.

2. The transceiver (4) according to Claim 1, wherein
the receiving mechanism (12) includes a switching element (28),
the transmitting mechanism (13) includes an amplifying element,
upon signal transmission, the switching element (28) is turned off and the amplifying element is turned on, and
upon signal reception, the switching element (28) is turned on and the amplifying element is turned off.

3. The transceiver (4) according to Claim 2, wherein the switching element (28) comprises a gallium arsenide device.

4. The transceiver (4) according to any one of Claims 1 to 3, wherein the receiving mechanism (12) further includes a matching resistor (25) such that the resistor is connected between the transmitting/receiving electrode (11) and ground.

5. The transceiver (4) according to any one of Claims 1 to 4, wherein the receiving mechanism (12) includes a parallel resonant circuit (22) including a capacitor (24) and an inductor (23) such that the circuit is connected between the transmitting/receiving electrode (11) and ground.

6. A communication system (1) comprising:
the transceiver (4) according to any one of Claims 1 to 5; and
a communication device (3) applying an information signal as an electric field to the transmission medium.
